# EUROPEAN PATENT SPECIFICATION

(11) **EP 3 067 238 B1**
(45) Date of publication and mention of the grant of the patent: **29.08.2018**
(21) Application number: 15158930.6
(22) Date of filing: 13.03.2015
(51) Int. Cl.: B60R 11/00, B60P 7/08, B60P 3/14, A47B 96/07

(54) **A securing system**
SICHERUNGSSYSTEM
SYSTÈME DE FIXATION

(43) Date of publication of application: 14.09.2016
(73) Proprietor: Modul-System HH AB, 431 22 Mölndal (SE)
(72) Inventor: Carlsson, Anders, SE-422 50 Hisings Backa (SE)
(74) Representative: AWA Sweden AB

(56) References cited:
- WO-A1-2011/000431
- AT-A1- 505 493
- DE-U1- 9 105 590
- JP-A- H10 323 249
- US-A- 4 009 549
- US-A- 4 949 929
- US-A1- 2014 117 063

## Description

### Field of the Invention

The present invention relates to a securing system for attaching a module unit to a wall in a cargo or a back space in a service vehicle.

### Technical Background

It is common practice in the art of service vehicles to equip a cargo space or a back space of an automotive vehicle with for example cupboards, tool holders, shelves or other. This is usually made in a separate step after the vehicle has been manufactured, i.e. the equipping of the vehicle in question is made separately from the manufacturing. Before the vehicle is equipped with specialized equipment, usually the cargo space of the vehicle is provided with an inner floor, usually made of wood, but the floor might also be made of for example an artificial, plastic material. This floor functions as a good support to work, stand and walk upon and is also used as an anchor plate for the module unit.

The module system is often also at least partly attached to the wall and the purpose is to counteract that the unit tip over for example in a turn. It is common practice to secure the module unit/units to the wall using standard brackets which are fastened to the vehicle wall or to a rail on the wall.

However, depending of the surrounding in the vehicle and the shape of the module unit a standard bracket may not be sufficient or it may even not fit.

WO09046480 is directed to a shelving assembly for the storage compartment of a vehicle. The shelving assembly includes a frame, a plurality of shelving members and mounting means for use in mounting to the storage compartment wall. US 4,009,549 A1 discloses a securing system according to the preamble of claim 1. There is a need for an alternative solution, which is even more flexible and which can be used on different kind of module units.

### Summary of the Invention

The object of the present invention is to provide a securing system that overcomes the above issues.

The invention is based on the insight that by having a securing system with a bracket and a connecting element, where the connecting element is movable relative the bracket a flexible securing system is achieved.

The invention relates to a securing system for attaching a module unit to a wall in a cargo or a back space in a service vehicle,
said securing system comprising
- a bracket adapted to be arranged to a rail on said wall,
- a connecting element adapted to be connected to said bracket and to said module unit, and
- a securing element adapted to fix said connecting element to said bracket through an opening in said bracket and an opening in said connecting element, and each opening in said bracket and said connecting element is an elongated opening for adjustable positioning of the connecting element relative to said bracket,
wherein said bracket comprises an anti-rotational portion extending in an angle to a surface of said bracket which is adapted to be arranged to said securing rail, and said anti-rotational portion is adapted to be fitted into an opening of said securing rail. During use, the securing element connects the connecting element and the bracket, and due to the elongated openings through which the securing element extends, the connecting element may be adjustably positioned relative the bracket so that the connecting element may be positioned in a suitable position relative a module unit. The module unit may for example be a cupboard, a tool holder, shelves or other module units. The securing system may hence be adapted to the surroundings, i.e. to the module unit and where it is placed. It also allows adjusting the position of the module unit relative the inner wall of the vehicle. The adjustability of the securing system provides a universal way of convenient fitting module units in back spaces or cargo spaces of different types of service vehicles. The securing element is preferably an adjustable securing element. The width of the elongated openings in the bracket and the connecting element is preferably so large that the securing element can easily be inserted through them. The extension of the elongated openings may depend on how adjustable the connecting element should be relative the bracket. The direction in which each elongated opening extends may depend on the direction which the connecting element should be adjustable relative the bracket, and in which direction the module unit may be adjustable positioned to the connecting element. For example if the module unit is connected to the elongated opening in the connecting element it may be adjustable positioned relative the connecting element and/or the bracket. The elongated openings may be rectangular with rounded edges. Alternatively, the elongated openings are slightly curved. The module unit may, during use of the securing system, be connected to the connecting element by a screw which for example is arranged through the elongated opening in the connecting element and fastened in the module unit.

According to at least one exemplary embodiment the securing element comprises a screw and a nut. A screw/nut connection is an adjustable connection, which is flexible and which can be opened and closed several times. The connecting element can be loosely connected to the bracket by the screw and the nut. The connecting element may then be positioned relative the bracket so that it is in the best position for the situation. The screw and the nut may then be tightened together so the connecting element is fixed to the bracket. This helps when mounting a module unit. The module unit may be connected to the connecting element and the connecting element may be loosely connected to the bracket, until the module unit is arranged in its final position, then the screw and the nut is tightened together.

According to at least one exemplary embodiment said bracket comprises a first leg adapted to be arranged to said rail on said wall, and a second leg, adapted to be connected to said connecting element, said second leg being connected in a predetermined angle to said first leg, and said elongated opening of said bracket being arranged in said second leg. The bracket may be produced by bending a planar sheet or piece of metal. The legs of the bracket may have a width which is larger than the thickness of the bracket. That is, if the bracket is made of a planar metal sheet which has been bent the width of the leg may be larger than the thickness of the metal sheet. By having the elongated opening in the second leg, which is in an angle to the first leg the connecting element can move relative the bracket in the direction of the elongated opening of the bracket during use. Due to the securing element, which is protruding through the two elongated openings the connecting element may also pivot around the securing element along the elongated opening in the bracket. The elongated opening in the connecting element allows the connecting element to overlap the second leg different much. The connecting element may hence be further adjustable relative bracket and also to the module unit it shall be connected with during use.

According to at least one exemplary embodiment said bracket is a flat metal sheet which has been bent.

According to at least one exemplary embodiment said predetermined angle is perpendicular to said first leg and said elongated opening of said bracket extends in a direction perpendicular to said first leg. If the elongate opening in the second leg extends perpendicular to the first leg, which is adapted to be connected to the securing rail, the elongated opening may extend perpendicular to the wall of the vehicle, i.e. into the inner area of the back space, and the connecting element and the module unit may hence be adjusted relative the wall of the service vehicle. The first leg preferably comprises a flat portion, which during use abuts the securing rail on the wall to which the elongated opening extends perpendicular.

According to at least one exemplary embodiment said elongated opening in said bracket being a first elongated opening in said bracket and said elongated opening in said connecting element being a first elongated opening in said connecting element, and said bracket further comprises a second elongated opening, which extends a distance from and in the same direction as said first elongated opening in said bracket, and said connecting element further comprises a second elongated opening which extends a distance from and in the same direction as said first elongated opening in said connecting element, and said securing system comprises a further securing element which is adapted to fix said connecting element to said bracket through said second elongated opening in said bracket and said second elongated opening in said connecting element. By having a second elongated opening both in the bracket and in the connecting element and a second securing element which connects the connecting element with the bracket through these second elongated openings, rotation of the connecting element when fixedly connected with the bracket may be prevented. The second securing element is preferably an adjustable securing element.

According to at least one exemplary embodiment said second securing element is a screw and a nut.

According to at least one exemplary embodiment said connecting element is an essentially flat connecting element. This way the securing system is adjustable in at least two directions, i.e. in the longitudinal direction of the elongated opening of the bracket and in the longitudinal direction of the elongated opening, depending on how the elongated opening of the connecting element is arranged relative to the elongated opening in the bracket. The connecting element may pivot around the securing element, and hence the elongated element/elongated elements in the connecting element may be arranged in an angle to the elongated opening in the bracket. Further, the connecting element may overlap bracket different much.

According to at least one exemplary embodiment one end of said first elongated opening of said bracket is arranged at a predetermined distance from a surface of said first leg, which is adapted to be in contact with said rail and one end of said second elongated opening is also arranged from essentially the same predetermined distance from said surface. Both the first and the second elongated opening in the bracket may start at the same distance from the first leg.

According to at least one exemplary embodiment one end of said elongated opening of said connecting element is arranged at a predetermined distance from a first edge of said connecting element and one end of said second elongated opening in said connecting element is also arranged from essential the same predetermined distance from said first edge. Both the first and the second elongated opening in the connecting element may start at the same distance from the same edge of the connecting element.

According to at least one exemplary embodiment said second elongated opening of said bracket has a shape which is essentially the same as said first elongated opening of said bracket and/or said second elongated opening of said connecting element has a shape which is essentially the same as said first elongated opening of said connecting element. The two elongated openings in the bracket are preferably two straight elongated holes, having the same width and length. The two elongated openings in the connecting element are preferably two straight elongated holes, having the same width and length. The width of the elongated holes in both the bracket and the connecting element are preferably adapted to the securing elements which are going to be use.

According to at least one exemplary embodiment said connecting element comprises a wall bracket connecting portion and a module unit connecting portion, which are arranged in an angle to each other and said elongated opening or said first and said second elongated openings of said connecting portion is/are arranged in said bracket connecting portion. The module unit connecting portion is adapted to be connected to the module unit and the wall bracket connecting portion is adapted to be connected to the bracket through the elongated openings. By having two portions in an angle to each other, the connecting element may provide further fastening options for the module unit.

According to at least one exemplary embodiment said connecting element comprises a further elongated opening which is adapted to receive a fastening element in order to connect said connecting element to said module unit during use. The fastening element may be a screw.

According to at least one exemplary embodiment said further elongated opening is a third elongated opening. An further elongated opening through which a fastening element for connecting the module unit to the connecting element makes the connecting element more flexible, since the fastening element may be arranged along the third elongated opening.

According to at least one exemplary embodiment one end of said further elongated opening extends at a distance from a second end of said first elongated opening and in the same direction or in an angle thereto. This makes it possible to have the connection to the module unit at a distance from the wall of the service vehicle during use of the securing system.

According to at least one exemplary embodiment said elongated opening, which is adapted to receive a fastening element in order to connect said connecting element to said module unit during use, is arranged in said module unit connecting portion.

According to at least one exemplary embodiment a fourth elongated opening is arranged in said connecting element, said third and said fourth elongated openings extend from an edge at the same distance and at a distance from each other and in the same direction. The third and the fourth elongated openings in the connecting element are preferably two straight elongated openings, having the same width and length.

According to the invention said securing system further comprises a securing rail, which is adapted during use to be connected to the inner wall of said back space of said service vehicle and to which said bracket is adapted to be connected to by a fastening element. The securing system becomes very flexible, by comprising a securing rail since the bracket and the connecting element may be adjustable in the longitudinal direction of the vehicle, due to the rail. The bracket may be a movable bracket which can be moved to a desired position in the longitudinal direction of the vehicle throughout the securing rail. The fastening element may be a screw and a nut.

According to at least one exemplary embodiment said bracket comprises a hole through which a fastening element is adapted to protrude and fasten said bracket to said securing rail.

According to at least one exemplary embodiment said hole is arranged in said first leg.

According to at least one exemplary embodiment said connecting element of said securing system is a first connecting element, and said securing system further comprises at least a second connecting element which has a different design than said first connecting element. Having at least two different connecting elements in the securing system, the user who is going to fasten the module unit to the inner wall of the service vehicle may choose between two different connecting elements and chose the one which is the most suitable depending on the situation and where it can be connected to the module unit. This makes the securing system more flexible. Preferably, if more than two connecting elements are comprised in the securing system, each comprises a different design. The user may also connect the second connecting element to the first connecting element, and arrange the module unit to the second connecting element. This way the securing system may become even more adjustable.

According to at least one exemplary embodiment said second connecting element may have a design as said connecting element describe above, however the design of said first and said second connecting element should differ.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

Other objectives, features and advantages of the present invention will appear from the following detailed disclosure, as well as from the drawings.

### Brief Description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows an open-up perspective view of a service vehicle comprising module units fastened to the service vehicle using securing systems according to the invention.
Fig. 2a shows a securing system according to a first embodiment of the invention in an exploded view and in perspective.
Fig. 2b shows the securing system in Fig. 2a in a assembled position and in perspective.
Fig. 2c shows the securing system in Fig. 2a and 2b in a different assembled position.
Fig. 3a shows a securing system according to a second embodiment of the invention in an exploded view and in perspective.
Fig. 3b shows the securing system in Fig. 3a in an assembled position and in perspective.
Fig. 4a shows a securing system according to a third embodiment of the invention in an exploded view and in perspective.
Fig. 4b shows the securing system in Fig. 4a in an assembled position and in perspective.
Fig. 4c shows the securing system in Fig. 4a and Fig. 4b arranged to a securing rail and to a module unit.
Fig. 5a shows a securing system according to a fourth embodiment of the invention in an exploded view and in perspective.
Fig. 5b shows the securing system in Fig. 5a in an assembled position and in perspective.
Fig. 6a shows a securing system according to a fifth embodiment of the invention in an exploded view and in perspective.
Fig. 6b shows the securing system in Fig. 6a in an assembled position and in perspective.
All the figures are highly schematic, not necessarily to scale, and they show only parts which are necessary in order to elucidate the invention, other parts being omitted or merely suggested.

### Detailed Description of Exemplary Embodiments

Embodiments of the invention will be described in more detail in the following with reference to the accompanying drawings.

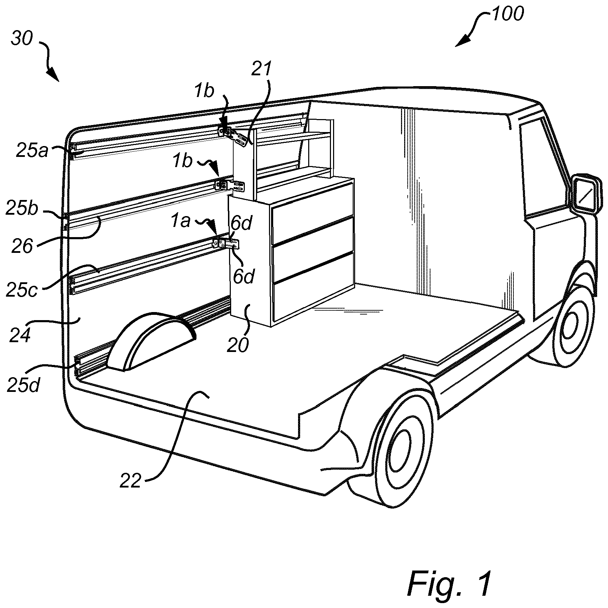

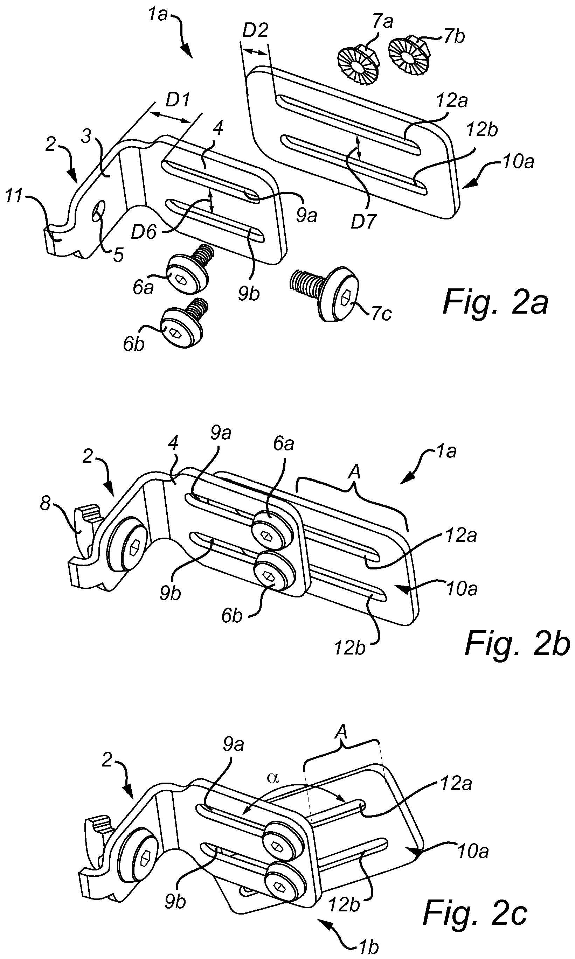

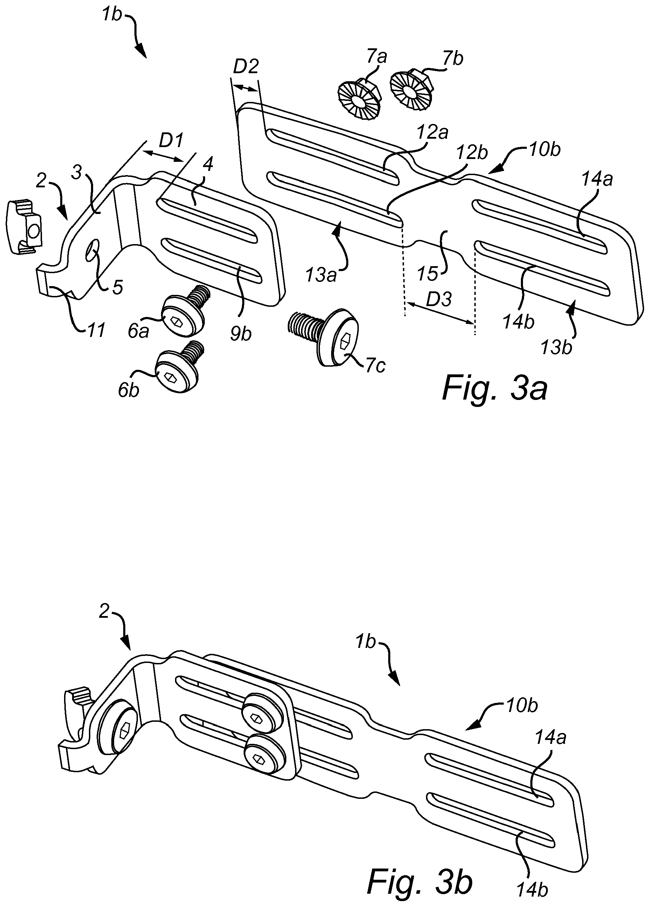

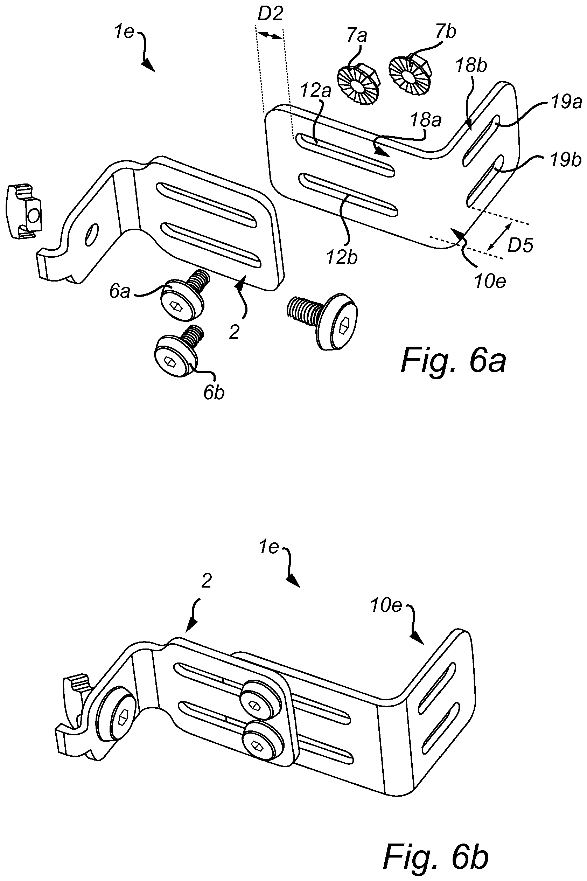

Fig. 1 shows a cargo space 30 in a service vehicle 100 with two module units 20, 21 arranged in the cargo space 30. The two module units are a chest of drawers 20 and a shelf unit 21. However, any kind of module units may be used. The chest of drawers 20 is arranged on the inner floor 22 of the cargo space 30 and arranged close to the inner wall 24. On the inner wall 24 of the cargo space 30 four securing rails 25a, 25b, 25c, 25d are arranged in the longitudinal direction of the vehicle 100. A first securing rail 25a is arranged close to the roof, a second securing rail 25d is arranged close to the floor 22 and a third and a fourth securing rail 25b, 25c are arranged there between. Each securing rail 25a, 25b, 25c, 25d has at least one undercut channel 26 which comprises fastening zones for the module units 20, 21. The undercut channel 26 enables stepless manoeuvrability of the module units. The chest of drawers 20 is secured to the fourth rails 25c in the middle by a first securing system 1a, which is further explained in connection with Figs. 2a-2c. A second securing system 1a having the same design may be arranged on the other side of the chest of drawers 20, or alternatively or additionally a further securing system 1a of the same design may connect the chest of drawers 20 to the second securing rail 25d close to the floor 22. Alternatively, a securing system shown and described in connection with either Figs. 3a, 3b-6a, 6b may be used instead of the securing system shown and described in connection with Figs. 2a-2c. On top of the chest of drawers 20 the shelf unit 21 is arranged and it is arranged at a distance from the inner wall 24 of the cargo space 30. The shelf unit 21 is secured to the two upper rails 25a, 25b by two securing systems 1b having a different design than the securing system 1a used for attaching the chest of drawers. The two securing systems 1b are shown and described in connection with Fig. 3a and Fig. 3b.

Alternatively, a securing system shown and described in connection with either Figs. 2a-2c, or 4a, 4b-6a, 6b may be used instead of the securing system shown and described in connection with Figs. 3a-3b.

Fig. 2a shows a securing system 1a according to a first embodiment. The securing system 1a comprises a bracket 2, which is adapted to be arranged to one of the securing rails 25a, 25b, 25c, 25d on said wall 24 in the service vehicle 100 shown in Fig. 1. The securing system 1a further comprises a connecting element 10a and securing elements 6a, 6b, 7a, 7b, which here are exemplified as two screws 6a, 6b and two nuts 7a, 7b adapted to fixate said connecting element 10a to said bracket 2. The connecting element 10a is adapted to be connected to said bracket 2 and to a module unit. The bracket 2 is L-shaped and comprises a first leg 3 and a second leg 4 joined at a right angle. The first leg 3 of the bracket is a wall connecting portion 3 and is adapted to be connected to a securing rail arranged to the wall during use. The second leg 4 is a connecting portion 4 adapted to be connected to the connecting element 10a.

The first leg 3 of the bracket 2 is connected in a right angle to the second leg 4. The first leg 3 comprises an opening 5 through which a screw 7c can be inserted and fastened through a nut 8 (see Fig. 2b) to one of the securing rail 25a, 25b, 25c, 25d shown in Fig. 1. The first leg 3 comprises an anti-rotation portion 11. The anti-rotational portion 11 protrudes in an angle from the first leg 3 in an opposite direction to the second leg 4. That is, it protrudes in the direction where the inner wall of the cargo space will be. The anti-rotational portion 11 is adapted to be inserted into the undercut channel 26 in one of the securing rails 25a, 25b, 25c, 25d during use and it prevents that the bracket 2 rotates when the bracket 2 is secured or is being secured to a securing rail 25 by the screw 7c and the nut 8. The nut 8 has an oblong shape and it can be so designed that the nut 8 does not have to be placed into the undercut channel 26 in the end of the securing rail, but may be placed into the channel at any place along the groove.

The second leg 4 has an elongated extension and comprises two elongated openings, i.e. a first opening 9a and a second opening 9b.The first opening 9a extends from a predetermined distance D1 from the first leg 3 in the elongated extension of the second leg 4, i.e. perpendicular to said first leg 3. The second opening 9b extends from essentially the same distance D1 from the first leg as the first opening 9a. The second opening 9b extends parallel to the first opening 9a and at a predetermined distance D6. The width of the two elongated openings 9a, 9b should be so large that the screws 6a, 6b can easily be inserted through them. The extension of the elongated openings may depend how adjustable the connecting element 10a should be relative the bracket 3.

The connecting element 10a is an essentially rectangular elongated plate, which comprises two elongated openings, i.e. a first opening 12a, and a second opening 12b which extends in the longitudinal direction of the rectangular elongated plate. The first opening 12a extends a predetermined distance D2 from one of the edges and in the longitudinal direction of the rectangular elongated plate. The first opening is an essentially straight opening. The second opening 12b extends from essentially the same distance from the edge as the first opening 12a. The second opening 12b extends parallel to the first opening 12a and at a predetermined distance D7. The width of the two elongated openings 12a, 12b should be so large that the screws 6a, 6b can easily be inserted through them. The extension of the elongated openings 9a, 9b, 12a, 12b may depend how adjustable the connecting element 10a should be relative the bracket 3.

Fig. 2b shows the securing system 1a in an assembled state. The bracket 2 is connected to the connecting element 10a by the two screws 6a, 6b and the two nuts 7a, 7b. The first screw 6a extends through the first elongated opening 9a in the bracket 2 and through the first elongated opening 12a in the connecting element 10a and is connected to the nut 7a (not shown), which fastens the connecting element 10a to the bracket 2. The other screw 6b extends through the second elongated opening 9b in the bracket 2 and through the second elongated opening 12b in the connecting element 10a and is connected to the nut 7b (not shown). A part of the connecting element 10a overlaps the second leg 4 of the bracket 2. However, a part of the connecting elements and its elongated openings 12a, 12b is not overlapped by the bracket 2. Two further screws 6d (see Fig. 1) may pass through the elongated openings 12a, 12b of the connecting element 10a in the area A, (see Fig. 2b) which is not overlapped by the bracket in order to connect the connecting element 10a to a module unit.

The connecting element 10a is arranged relative the bracket such that the elongated openings 12a, 12b are arranged parallel with the elongated openings 9a, 9b of the bracket 2. However, the connecting element 10a is pivotable about the bracket 2. The connecting element 10a is also adjustable positionable relative the bracket 2 and the module unit it shall be connected to due to the elongated openings 12a, 12b, 9a, 9b in the connecting element 10a and in the bracket 2. This is shown in Fig. 2c where the elongated openings 12a, 12b in the connecting element 10a are arranged in an angle α to the elongated openings 9a, 9b in the bracket 2. The module unit connecting area A is hence arranged at a different position than in Fig. 2b.

Fig. 3a shows a securing system 1b according to a second embodiment with a bracket 2, a connecting element 10b and securing elements 6a, 6b, 7a, 7b. The bracket 2 has the same design as the bracket 2 in the securing system 10a in Fig. 2a-2c and will hence not be described again. The securing elements 6a, 6b, 7a, 7b are exemplified as two screws 6a, 6b and two nuts 7a, 7b.

The connecting element 10b has a slightly different design. The connecting element 10b has an elongated extension with a narrowing portion 15 in the middle dividing the connecting element 10b in two different portions 13a, 13b. The first portion 13a is a bracket connecting portion 13a. In the first portion two elongated openings 12a, 12b, similar to the elongated openings 12a, 12b in the connecting element 10a in Fig. 2a-2c, are arranged and hence the same reference numbers have been used. The first opening 12a, and the second opening 12b extends in the longitudinal direction of the elongated connecting element. Each elongated opening 12a, 12b extend from a predetermined distance D2 from one of the edges and the two elongated openings 12a, 12b extend at a distance and parallel to each other and have the same dimensions. The width of the two elongated openings should be so large that the screws 6a, 6b can easily be inserted through them. The extension of the elongated opening may depend how adjustable the connecting element 10b should be relative the bracket 2. The second portion 13b is a module unit connecting portion. In the second portion 13b two further elongated openings 14a, 14b are arranged and each extends in the longitudinal direction of the elongated connecting element. Each elongated opening 14a, 14b extend from a predetermined distance D3 from the first and the second elongated openings 12a, 12b and they extend at a distance from each other and parallel to each other and have the same dimensions. The width of the two elongated openings 14a, 14b should be so large that the screws can easily be inserted through them, since the second portion of the connecting element 10b is adapted to be connected to a module unit. The extension of the elongated openings 14a, 14b may depend how adjustable the connecting element 10a should be relative the module unit.

Fig. 3b shows how the connecting element 10b is connected to the bracket 2, and it is connected to the bracket 2 in the same way as described in connection with Fig. 2b. The connecting element 10b is also pivotably and adjustably arranged to the bracket as the connecting element 10a in Fig. 2a-2c, and will hence not be further described.

Two further screws (not shown) may pass through the elongated openings 14a, 14b of the connecting element 10b in the second portion 13b in order to connect the connecting element to a module unit during use (In Fig. 1 this is shown).

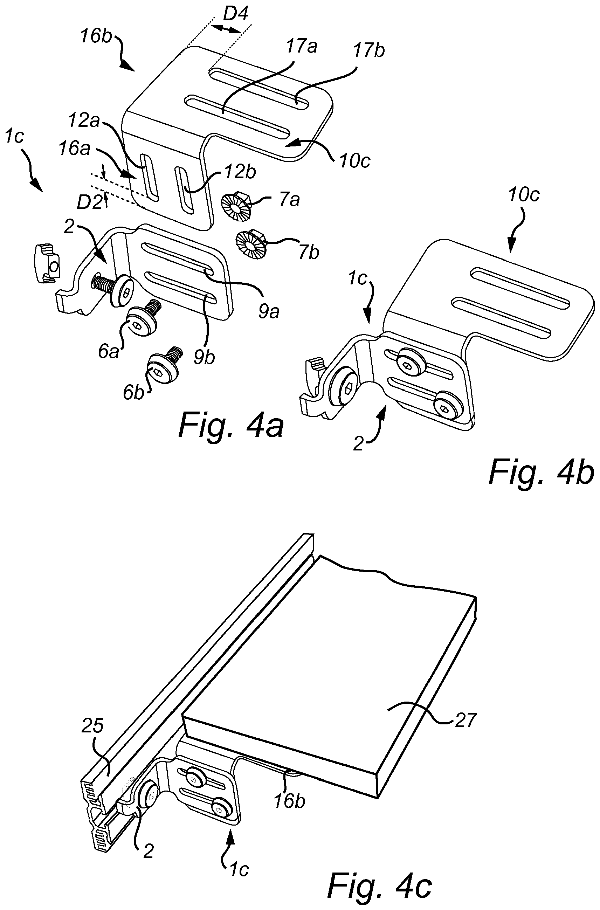

Fig. 4a shows a securing system 1c according to a third embodiment. It comprises a bracket 2, a connecting element 10c and two securing elements 6a, 6b, 7a, 7b, where one securing element 6a, 6b, 7a, 7b is exemplified as a screw 6a, 6b and a nut 7a, 7b. The bracket 2 has the same design as the bracket 2 in the securing system 10a in Fig. 2a-2c and will hence not be described again.

The connecting element 10c is an L-shaped connecting element 10c with two different portions 16a, 16b. The first portion 16a is a bracket connecting portion 16a. The second portion 16b is a module unit connecting portion and it is connected perpendicular to the first portion 16a. The second portion 16b has a rectangular shape and the first portion 16a extends partly along one of the longer sides. It is exemplified as extending from one short side of the rectangular shaped second portion to almost half the length of the long side of the rectangular shaped second portion. In the first portion 16a two elongated openings 12, similar to the elongated openings in the connecting element 10a in Fig. 2a-2c are arranged. Each elongated openings 12a, 12b extends from a predetermined distance D2 from one of the edges and they extend at a distance and parallel to each other and have the same dimensions. The width of the two elongated openings 12a, 12b should be so large that the screws can easily be inserted through them. The extension of the elongated opening may depend how adjustable the connecting element 10a should be relative the bracket 2. The first opening 12a, and the second opening 12b extends perpendicular to the second portion 16b. In the second portion 16b two further elongated openings, a third and a fourth elongated opening 17a, 17b are arranged and each extends in the longitudinal direction of the rectangular shaped second portion. The third and the fourth elongated openings 17a, 17b extend perpendicular to the first and the second elongated openings 12a, 12b. The third and the fourth elongated openings 17a, 17b also extend from a predetermined distance D4 from one edge and they extend at a distance and parallel to each other and have the same dimensions. The width of the third and the fourth elongated opening 17a, 17b should be so large that screws or other fastening means can easily be inserted through them, since the second portion of the connecting element 10c is adapted to be connected to a module unit. The extension of the elongated openings 17a, 17b may depend how adjustable the connecting element 10a should be relative the module unit.

Fig. 4b shows how the connecting element 10c is connected to the bracket 2, and it is connected to the bracket in the same way as described in connection with Fig. 2b, except that the elongated openings 12a, 12b in the first portion 16a are arranged perpendicular instead of parallel with the elongated openings 9a, 9b in the bracket 2. The connecting element 10c is also pivotably and adjustably arranged to the bracket 2 as the connecting element 10a in Fig. 2a-2c, and will hence not be further described.

Two further screws (not shown) may pass through the elongated openings 17a, 17b, of the connecting element 10c respectively in the second area 16b in order to connect the connecting element 10c to a module unit during use.

Fig. 4c shows how the fastening system 1c in Figs. 4a and 4b can be used. The bracket 2 is secured to a securing rail 25, which is attached to the inner wall of the back space of a service vehicle (not shown). A shelf 27, for example a shelf in the shelf unit 21 in Fig. 1 can be secured to the securing system 1c by securing the second portion 16b of the connecting element 10c to the shelf 27 using screws (not shown) which protrudes through the two elongated openings 17a, 17b in the second portion 16b (seen in Fig. 4a) and is screwed into the shelf 27 from bellow.

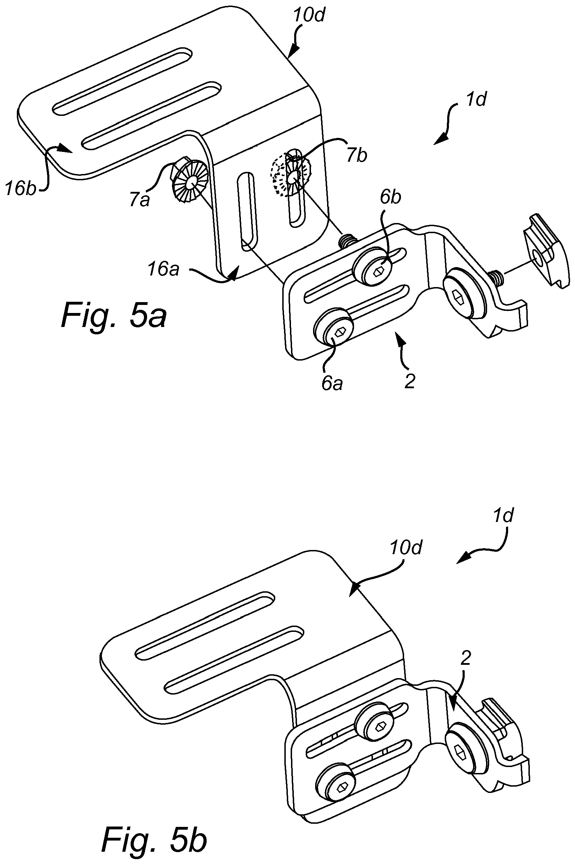

Fig. 5a shows a securing system 1d according to a fourth embodiment. It comprises a bracket 2, a connecting element 10d and two securing elements 6a, 6b, 7a, 7b. The bracket 2 has the same design as the bracket 2 in the securing system 10a in Fig. 2a-2c and will hence not be described again.

The connecting element 10d has a similar design as the connecting element 10c, except that the first portion 16a is arranged at the other end of the second portion 16b, i.e. in the opposite end of second portion. Hence the connecting element will not be further described.

Fig. 5b shows how the connecting element 10d is connected to the bracket 2, and it is connected to the bracket in the same way as described in connection with Fig. 4b.

Fig. 6a shows a securing system 1e according to a fifth embodiment. It comprises a bracket 2, a connecting element 10e and two securing elements 6a, 6b, 7a, 7b. The bracket 2 has the same design as the bracket 2 in the securing system 1a in Fig. 2a-2c and will hence not be described again.

The connecting element 10e is an L-shaped connecting element 10e with two different portions 18a, 18b. The first portion 18a is a bracket connecting portion 18a and it has a rectangular shape. In the first portion 18a two elongated openings 12a, 12b, similar to the elongated openings in the connecting element 10a in Fig. 2a-2c are arranged. The first opening 12a, and the second opening 12b extends in the longitudinal direction of the rectangular shaped connecting portion 18a. Each elongated opening 12 extend from a predetermined distance D2 from one of the edges and they extend at a distance and parallel to each other and have the same dimensions. The width of the two elongated openings 12a, 12b should be so large that the screws can easily be inserted through them. The extension of the elongated opening may depend how adjustable the connecting element 10e should be relative the bracket 2. The second portion 18b is a module unit connecting portion and it is connected perpendicular to the first portion 18a. The second portion 18b has a rectangular shape and it elongates is in an angle to the first portion 16a.

Two further elongated openings 19a, 19b, i.e. a third and a fourth elongate opening, are arranged in the second portion 18b and each extends in the longitudinal direction of the rectangular shaped second portion. Each elongated opening 19a, 19b extend from a predetermined distance D5 from one edge and they extend at a distance and parallel to each other and have the same dimensions. The width of the two elongated openings 19a, 19b should be so large that the screws can easily be inserted through them, since through these openings 19a, 19b the second portion of the connecting element 10e is adapted to be connected to a module unit. The extension of the elongated openings 19a, 19b may depend how adjustable the connecting element 10e should be relative the module unit. Fig. 6b shows how the connecting element 10e is connected to the bracket 2, and it is connected to the bracket in the same way as described in connection with Fig. 2b. The connecting element 10e is also pivotably and adjustably arranged to the bracket as the connecting element 10a in Fig. 2a-2c, and will hence not be further described.

Alternatively, between the connecting elements 10a, 10b, 10c, 10d, 10e, described in connection with Figs. 2a - 6b, and a module unit, a further connecting element having the same or a different design may be arranged. This would make the securing systems 1a, b, 1c, 1c, 1d, 1e even more flexible.

## Claims

1. A securing system (1a, 1b, 1c, 1d, 1e) for attaching a module unit (20, 21) to a wall (24) in a cargo or a back space (30) in a service vehicle (100), said securing system (1a, 1b, 1c, 1d, 1e) comprising
- a bracket (2) adapted to be arranged to a securing rail (25a, 25b, 25c, 25d) on said wall (24),
- a connecting element (10a, 10b, 10c, 10d, 10e) adapted to be connected to said bracket (2) and to said module unit (20, 21), and
- a securing element (6a, 7a) adapted to fix said connecting element (10a, 10b, 10c, 10d, 10e) to said bracket (2) through an opening (9a) in said bracket (2) and an opening (12a) in said connecting element (10a, 10b, 10c, 10d, 10e), and each opening (9a, 12a) in said bracket (2) and said connecting element (10a, 10b, 10c, 10d, 10e) is an elongated opening (9a, 12a) for adjustable positioning of the connecting element (10a, 10b, 10c, 10d, 10e) relative to said bracket (2),
**characterized in that** said bracket (2) comprises an anti-rotational portion (11) extending in an angle to a surface of said bracket (2) which is adapted to be arranged to said securing rail, and said anti-rotational portion is adapted to be fitted into an opening of said securing rail (25a, 25b, 25c, 25d).

2. A securing system (1a, 1b, 1c, 1d, 1e) according to claim 1, wherein said securing element (6a, 7a) comprises a screw (6a) and a nut (7a).

3. A securing system (1a, 1b, 1c, 1d, 1e) according to any one of preceding claims, wherein said bracket (2) comprises
- a first leg (3) adapted to be arranged to said wall (24) or said securing rail (25a, 25b, 25c, 25d) on said wall (24), and
- a second leg (4), adapted to be connected to said connecting element (10a, 10b, 10c, 10d, 10e),
said second leg (4) being connected in a predetermined angle to said first leg (3), and said elongated opening (9a) of said bracket (2) being arranged in said second leg (4).

4. A securing system (1a, 1b, 1c, 1d, 1e) according to claim 3, said predetermined angle is perpendicular to said first leg (3) and said elongated opening (9a) of said bracket (2) extends in a direction perpendicular to said first leg (3).

5. A securing system (1a, 1b, 1c, 1d, 1e) according to any one of the preceding claims, wherein said elongated opening (9a) in said bracket (2) being a first elongated opening (9a) in said bracket (2) and said elongated opening (12a) in said connecting element (10a, 10b, 10c, 10d, 10e) being a first elongated opening (12a) in said connecting element (10a, 10b, 10c, 10d, 10e), and
- said bracket (2) further comprises a second elongated opening (9b), which extends a distance from and in the same direction as said first elongated opening (9a) in said bracket (2),
- said connecting element (10a, 10b, 10c, 10d, 10e) further comprises a second elongated opening (12b) which extends a distance from and in the same direction as said first elongated opening (12a) in said connecting element (10a, 10b, 10c, 10d, 10e), and
said securing system (1a, 1b, 1c, 1d, 1e) comprises a further securing element (6b, 7b) which is adapted to fix said connecting element (10a, 10b, 10c, 10d, 10e) to said bracket (2) through said second elongated opening (9b) in said bracket (2) and said second elongated opening (12b) in said connecting element (10a, 10b, 10c, 10d, 10e).

6. A securing system (1a, 1b, 1c, 1d, 1e) according to claim 5, wherein one end of said elongated opening (12a) of said connecting element (10a, 10b, 10c, 10d, 10e) is arranged at a predetermined distance (D2) from a first edge of said connecting element (10a, 10b, 10c, 10d, 10e) and one end of said second elongated opening (12b) in said connecting element (10a, 10b, 10c, 10d, 10e) is also arranged from essentially the same predetermined distance(D2) from said first edge.

7. A securing system (1a, 1b, 1c, 1d, 1e) according to claim 5 or 6, one end of said first elongated opening (9a) of said bracket (2) is arranged at a predetermined distance (D1) from a surface of said first leg (3), which is adapted to be in contact with said wall (24) or said securing rail (25a, 25b, 25c, 25d) and one end of said second elongated opening (9b) is also arranged from essentially the same predetermined distance (D1) from said surface.

8. A securing system (1a, 1b, 1c, 1d, 1e) according to claim 5 or 6 or 7, wherein said second elongated opening (9b) of said bracket (2) has a shape which is essentially the same as said first elongated opening (9a) of said bracket (2) and/or said second elongated opening (12b) of said connecting element (10a, 10b, 10c, 10d, 10e) has a shape which is essentially the same as said first elongated opening (12a) of said connecting element (10a, 10b, 10c, 10d, 10e).

9. A securing system (1a, 1b) according to any one of the preceding claims, wherein said connecting element (10a, 10b) is an essentially flat connecting element.

10. A securing system (1c, 1d, 1e) according to any one of the claims 1-8, wherein said connecting element (10c, 10d, 10e) comprises a wall bracket connecting portion (16a, 18a) and a module unit connecting portion (16b, 18b), which are arranged in an angle to each other and said elongated opening (12a) or said first and said second elongated openings (12a, 12b) of said connecting element (10c, 10d, 10e) is/are arranged in said bracket connecting portion (16a, 18a).

11. A securing system (1b, 1c, 1d, 1e) according to any one of the preceding claims, wherein said connecting element (10b, 10c, 10d, 10e) comprises a further elongated opening (14a, 17a, 19a) which is adapted to receive a fastening element in order to connect said connecting element (10b, 10c, 10d, 10e) to said module unit (20, 21) during use.

12. A securing system (1c, 1d, 1e) according to claim 11, in combination with claim 10, wherein said elongated opening (17a, 19a), which is adapted to receive a fastening element in order to connect said connecting element (10c, 10d, 10e) to said module unit (20, 21) during use, is arranged in said module unit connecting portion (16b, 18b).

13. A securing system (1a, 1b, 1c, 1d, 1e) according to any one of the preceding claims, wherein said securing system (1a, 1b, 1c, 1d, 1e) further comprises a securing rail (25a, 25b, 25c, 25d), which is adapted during use to be connected to the inner wall (24) of said back space of said service vehicle and to which said bracket (2) is adapted to be connected to by a fastening element.

14. A securing system (1a, 1b, 1c, 1d, 1e) according to any one of preceding claims, wherein said connecting element (10a, 10b, 10c, 10d, 10e) of said securing system (1a, 1b, 1c, 1d, 1e) is a first connecting element (10a, 10b, 10c, 10d, 10e), and said securing system (1a, 1b, 1c, 1d, 1e) further comprises at least a second connecting element (10a, 10b, 10c, 10d, 10e) which has a different design than said first connecting element (10a, 10b, 10c, 10d, 10e).

## Patentansprüche

1. Sicherungssystem (1a, 1b, 1c, 1d, 1e) zum Anbringen einer Moduleinheit (20, 21) an einer Wand (24) in einem Lade- oder einem Hinterraum (30) in einem Nutzfahrzeug (100), wobei das Sicherungssystem (1a, 1b, 1c, 1d, 1e) Folgendes umfasst:
- eine Halterung (2), die ausgelegt ist, um zu einer Sicherungsschiene (25a, 25b, 25c, 25d) auf der Wand (24) angeordnet zu sein,
- ein Verbindungselement (10a, 10b, 10c, 10d, 10e), das ausgelegt ist, um mit der Halterung (2) und der Moduleinheit (20, 21) verbunden zu sein, und
- ein Sicherungselement (6a, 7a), das ausgelegt ist, um das Verbindungselement (10a, 10b, 10c, 10d, 10e) an der Halterung (2) durch eine Öffnung (9a) in der Halterung (2) und eine Öffnung (12a) in dem Verbindungselement (10a, 10b, 10c, 10d, 10e) zu befestigen, und jede Öffnung (9a, 12a) in der Halterung (2) und dem Verbindungselement (10a, 10b, 10c, 10d, 10e) eine längliche Öffnung (9a, 12a) zum Positionseinstellen des Verbindungselements (10a, 10b, 10c, 10d, 10e) relativ zu der Halterung (2) ist,
**dadurch gekennzeichnet, dass** die Halterung (2) einen drehfesten Abschnitt (11) umfasst, der sich in einem Winkel zu einer Fläche der Halterung (2) erstreckt, der ausgelegt ist, um zu der Sicherungsschiene angeordnet zu sein, und der drehfeste Abschnitt ausgelegt ist, um in eine Öffnung der Sicherungsschiene (25a, 25b, 25c, 25d) eingepasst zu sein.

2. Sicherungssystem (1a, 1b, 1c, 1d, 1e) nach Anspruch 1, wobei das Sicherungselement (6a, 7a) eine Schraube (6a) und eine Mutter (7a) umfasst.

3. Sicherungssystem (1a, 1b, 1c, 1d, 1e) nach einem der vorhergehenden Ansprüche, wobei die Halterung (2) Folgendes umfasst:
- ein erstes Bein (3), das ausgelegt ist, um zu der Wand (24) oder der Sicherungsschiene (25a, 25b, 25c, 25d, 25e) auf der Wand (24) angeordnet zu sein, und
- ein zweites Bein (4), das ausgelegt ist, um mit dem Verbindungselement (10a, 10b, 10c, 10d, 10e) verbunden zu sein, wobei das zweite Bein (4) in einem vorbestimmten Winkel mit dem ersten Bein (3) verbunden ist und die längliche Öffnung (9a) der Halterung (2) in dem zweiten Bein (4) angeordnet ist.

4. Sicherungssystem (1a, 1b, 1c, 1d, 1e) nach Anspruch 3, wobei der vorbestimmte Winkel senkrecht zu dem ersten Bein (3) ist und sich die längliche Öffnung (9a) der Halterung (2) in eine Richtung senkrecht zu dem ersten Bein (3) erstreckt.

5. Sicherungssystem (1a, 1b, 1c, 1d, 1e) nach einem der vorhergehenden Ansprüche, wobei die längliche Öffnung (9a) in der Halterung (2) eine erste längliche Öffnung (9a) in der Halterung (2) ist und die längliche Öffnung (12a) in dem Verbindungselement (10a, 10b, 10c, 10d, 10e) eine erste längliche Öffnung (12a) in dem Verbindungselement (10a, 10b, 10c, 10d, 10e) ist und
- die Halterung (2) ferner eine zweite längliche Öffnung (9b) umfasst, die sich in einem Abstand von und in die gleiche Richtung der ersten länglichen Öffnung (9a) in der Halterung (2) erstreckt,
- das Verbindungselement (10a, 10b, 10c, 10d, 10e) ferner eine zweite längliche Öffnung (12b) umfasst, die sich in einem Abstand von und in die gleiche Richtung der ersten länglichen Öffnung (12a) in dem Verbindungselement (10a, 10b, 10c, 10d, 10e) erstreckt, und
das Sicherungssystem (1a, 1b, 1c, 1d, 1e) ein weiteres Sicherungselement (6b, 7b) umfasst, das ausgelegt ist, um das Verbindungselement (10a, 10b, 10c, 10d, 10e) an der Halterung (2) durch die zweite längliche Öffnung (9b) in der Halterung (2) und die zweite längliche Öffnung (12b) in dem Verbindungselement (10a, 10b, 10c, 10d, 10e) zu befestigen.

6. Sicherungssystem (1a, 1b, 1c, 1d, 1e) nach Anspruch 5, wobei ein Ende der länglichen Öffnung (12a) des Verbindungselements (10a, 10b, 10c, 10d, 10e) in einem vorbestimmten Abstand (D2) von einer ersten Kante des Verbindungselements (10a, 10b, 10c, 10d, 10e) angeordnet ist und ein Ende der zweiten länglichen Öffnung (12b) in dem Verbindungselement (10a, 10b, 10c, 10d, 10e) auch in im Wesentlichen dem gleichen vorbestimmten Abstand (D2) von der ersten Kante angeordnet ist.

7. Sicherungssystem (1a, 1b, 1c, 1d, 1e) nach Anspruch 5 oder 6, wobei ein Ende der ersten länglichen Öffnung (9a) der Halterung (2) in einem vorbestimmten Abstand (D1) von einer Fläche des ersten Beins (3) angeordnet ist, das ausgelegt ist, um mit der Wand (24) oder der Sicherungsschiene (25a, 25b, 25c, 25d) in Kontakt zu sein, und ein Ende der zweiten länglichen Öffnung (9b) auch in im Wesentlichen dem gleichen vorbestimmten Abstand (D1) von der Fläche angeordnet ist.

8. Sicherungssystem (1a, 1b, 1c, 1d, 1e) nach Anspruch 5 oder 6 oder 7, wobei die zweite längliche Öffnung (9b) der Halterung (2) eine Form hat, die im Wesentlichen die gleiche ist wie die der ersten länglichen Öffnung (9a) der Halterung (2), und/oder die zweite längliche Öffnung (12b) des Verbindungselements (10a, 10b, 10c, 10d, 10e) eine Form hat, die im Wesentlichen die gleiche ist wie die der ersten länglichen Öffnung (12a) des Verbindungselements (10a, 10b, 10c, 10d, 10e).

9. Sicherungssystem (1a, 1b) nach einem der vorhergehenden Ansprüche, wobei das Verbindungselement (10a, 10b) ein im Wesentlichen flaches Verbindungselement ist.

10. Sicherungssystem (1c, 1d, 1e) nach einem der Ansprüche 1-8, wobei das Verbindungselement (10c, 10d, 10e) einen Wandhalterung-Verbindungsabschnitt (16a, 18a) und einen Moduleinheit-Verbindungsabschnitt (16b, 18b) umfasst, die in einem Winkel zueinander angeordnet sind, und die längliche Öffnung (12a) oder die erste und die zweite längliche Öffnung (12a, 12b) des Verbindungselements (10c, 10d, 10e) in dem Halterung-Verbindungsabschnitt (16a, 18a) angeordnet ist/sind.

11. Sicherungssystem (1b, 1c, 1d, 1e) nach einem der vorhergehenden Ansprüche, wobei das Verbindungselement (10b, 10c, 10d, 10e) eine weitere längliche Öffnung (14a, 17a, 19a) umfasst, die ausgelegt ist, um ein Befestigungselement aufzunehmen, um das Verbindungselement (10b, 10c, 10d, 10e) mit der Moduleinheit (20, 21) während des Gebrauchs zu verbinden.

12. Sicherungssystem (1c, 1d, 1e) nach Anspruch 11 in Kombination mit Anspruch 10, wobei die längliche Öffnung (17a, 19a), die ausgelegt ist, um ein Befestigungselement aufzunehmen, um das Verbindungselement (10c, 10d, 10e) mit der Moduleinheit (20, 21) während des Gebrauchs zu verbinden, in dem Moduleinheit-Verbindungsabschnitt (16b, 18b) angeordnet ist.

13. Sicherungssystem (1a, 1b, 1c, 1d, 1e) nach einem der vorhergehenden Ansprüche, wobei das Sicherungssystem (1a, 1b, 1c, 1d, 1e) ferner eine Sicherungsschiene (25a, 25b, 25c, 25d) umfasst, die ausgelegt ist, um während des Gebrauchs mit der inneren Wand (24) des Hinterraums des Nutzfahrzeugs verbunden zu sein, und bezüglich der die Halterung (2) ausgelegt ist, durch ein Befestigungselement verbunden zu sein.

14. Sicherungssystem (1a, 1b, 1c, 1d, 1e) nach einem der vorhergehenden Ansprüche, wobei das Verbindungselement (10a, 10b, 10c, 10d, 10e) des Sicherungssystems (1a, 1b, 1c, 1d, 1e) ein erstes Verbindungselement (10a, 10b, 10c, 10d, 10e) ist und das Sicherungssystem (1a, 1b, 1c, 1d, 1e) ferner mindestens ein zweites Verbindungselement (10a, 10b, 10c, 10d, 10e) umfasst, das einen anderen Entwurf hat als das erste Verbindungselement (10a, 10b, 10c, 10d, 10e).

## Revendications

1. Système de fixation (1a, 1b, 1c, 1d, 1e) pour la fixation d'une unité de module (20, 21) à une paroi (24) dans un espace de cargaison ou arrière (30) dans un véhicule utilitaire (100), ledit système de fixation (1a, 1b, 1c, 1d, 1e) comprenant
- une console (2) apte à être disposée sur un rail de fixation (25a, 25b, 25c, 25d) sur ladite paroi (24),
- un élément de connexion (10a, 10b, 10c, 10d, 10e) apte à être connecté à ladite console (2) et à ladite unité de module (20,21) et
- un élément de fixation (6a, 7a) apte à fixer ledit élément de connexion (10a, 10b, 10c, 10d, 10e) à ladite console (2) à travers un orifice (9a) de ladite console (2) et un orifice (12a) dudit élément de connexion (10a, 10b, 10c, 10d, 10e), chaque orifice (9a, 12a) de ladite console (2) et dudit élément de connexion (10a, 10b, 10c, 10d, 10e) étant un orifice allongé (9a, 12a) pour le positionnement réglable de l'élément de connexion (10a, 10b, 10c, 10d, 10e) par rapport à ladite console (2),
**caractérisé en ce que** ladite console (2) comprend une section anti-rotation (11) s'étendant en angle par rapport à une surface de ladite console (2) et qui est apte à être disposée sur ledit rail de fixation (25a, 25b, 25c, 25d), et que ladite section anti-rotation est apte à être ajustée dans un orifice dudit rail de fixation (25a, 25b, 25c, 25d).

2. Système de fixation (1a, 1b, 1c, 1d, 1e) selon la revendication 1, dans lequel ledit élément de fixation (6a, 7a) comprend une vis (6a) et un écrou (7a).

3. Système de fixation (1a, 1b, 1c, 1d, 1e) selon l'une quelconque des revendications précédentes, dans lequel ladite console (2) comprend
- un premier pied (3) apte à être disposé sur ladite paroi (24) dudit rail de fixation (25a, 25b, 25c, 25d) sur ladite paroi (24), et
- un second pied (4) apte à être connecté audit élément de connexion (10a, 10b, 10c, 10d, 10e),
ledit second pied (4) étant connecté suivant un angle prédéterminé audit premier pied (3), et ledit orifice allongé (9a) de la console (2) étant pratiqué dans ledit second pied (4).

4. Système de fixation (1a, 1b, 1c, 1d, 1e) selon la revendication 3, ledit angle prédéterminé étant perpendiculaire audit premier pied (3) et ledit orifice allongé (9a) de ladite console (2) s'étendant dans un sens perpendiculaire audit premier pied (3).

5. Système de fixation (1a, 1b, 1c, 1d, 1e) selon l'une quelconque des revendications précédentes, ledit orifice allongé (9a) de ladite console (2) étant un premier orifice allongé (9a) de ladite console (2) et ledit orifice allongé (12a) dudit élément de connexion (10a, 10b, 10c, 10d, 10e) étant un premier orifice allongé (12a) dudit élément de connexion (10a, 10b, 10c, 10d, 10e), et
- ladite console (2) comprenant en outre un second orifice allongé (9b) qui s'étend à distance de et dans le même sens que ledit premier orifice allongé (9a) de ladite console (2),
- ledit élément de connexion (10a, 10b, 10c, 10d, 10e) comprenant en outre un second orifice allongé (12 b) qui s'étend à distance de et dans le même sens que ledit premier orifice allongé (9a) dudit élément de connexion (10a, 10b, 10c, 10d, 10e),
ledit système de fixation (1a, 1b, 1c, 1d, 1e) comprenant un autre élément de fixation (6b, 7b) qui est apte à fixer ledit élément de connexion (10a, 10b, 10c, 10d, 10e) à ladite console (2) à travers ledit second orifice allongé (9b) de ladite console (2) et ledit second orifice allongé (12b) dudit élément de connexion (10a, 10b, 10c, 10d, 10e).

6. Système de fixation (1a, 1b, 1c, 1d, 1e) selon la revendication 5, dans lequel une extrémité dudit orifice allongé (12a) dudit élément de connexion (10a, 10b, 10c, 10d, 10e) est disposée à une distance prédéterminée (D2) d'un premier bord dudit élément de connexion (10a, 10b, 10c, 10d, 10e) et une extrémité dudit second orifice allongé (12b) dudit élément de connexion (10a, 10b, 10c, 10d, 10e) est aussi disposée à sensiblement la même distance prédéterminée (D2) dudit premier bord.

7. Système de fixation (1a, 1b, 1c, 1d, 1e) selon la revendication 5 ou 6, dans lequel une extrémité dudit premier orifice allongé (9a) de ladite console (2) est disposée à une distance prédéterminée (D1) d'une surface dudit premier pied (3) qui est apte à être en contact avec ladite paroi (24) dudit rail de fixation (25a, 25b, 25c, 25d) et une extrémité dudit second orifice allongé (9b) est aussi disposée à sensiblement la même distance prédéterminée (D1) de ladite surface.

8. Système de fixation (1a, 1b, 1c, 1d, 1e) selon la revendication 5 ou 6 ou 7, dans lequel ledit second orifice allongé (9b) de ladite console (2) a une forme qui est sensiblement la même que celle dudit premier orifice allongé (9a) de ladite console (2) et/ou ledit second orifice allongé (12b) dudit élément de connexion (10a, 10b, 10c, 10d, 10e) a une forme qui est sensiblement la même que celle dudit premier orifice allongé (12a) dudit élément de connexion (10a, 10b, 10c, 10d, 10e).

9. Système de fixation (1a, 1b) selon l'une quelconque des revendications précédentes, dans lequel ledit élément de connexion (10a, 10b) est un élément de connexion sensiblement plat.

10. Système de fixation (1c, 1d, 1e) selon l'une quelconque des revendications 1 à 8, dans lequel ledit élément de connexion (10c, 10d, 10e) comprend une section de connexion de console à la paroi (16a, 18a) et une section de connexion d'unité de module (16b, 18b) qui sont disposées en angle l'une par rapport à l'autre et ledit orifice allongé (12a) ou ledit premier et ledit second orifice allongé (12a, 12b) dudit élément de connexion (10c, 10d, 10e) est/sont disposés dans ladite section de connexion de console (16a,18a).

11. Système de fixation (1b, 1c, 1d, 1e) selon l'une quelconque des revendications précédentes, dans lequel ledit élément de connexion (10b, 10c, 10d, 10e) comprend un autre orifice allongé (14a, 17a, 19a) qui est apte à recevoir un élément de fixation afin de connecter ledit élément de connexion (10b, 10c, 10d, 10e) à ladite unité de module (20, 21) en cours d'utilisation.

12. Système de fixation (1c, 1d, 1e) selon la revendication 11 combinée à la revendication 10, dans lequel ledit orifice allongé (17a, 19a), qui est apte à recevoir un élément de fixation afin de connecter ledit élément de connexion (10c, 10d, 10e) à ladite unité de module (20, 21) en cours d'utilisation, est pratiqué dans ladite section de connexion d'unité de module (16b, 18b).

13. Système de fixation (1a, 1b, 1c, 1d, 1e) selon l'une quelconque des revendications précédentes, ledit système de fixation (1a, 1b, 1c, 1d, 1e) comprenant en outre un rail de fixation (25a, 25b, 25c, 25d) qui est apte, en cours d'utilisation, à être connecté à la paroi interne (24) dudit espace arrière dudit véhicule utilitaire et auquel ladite console (2) est apte à être connectée par un élément de fixation.

14. Système de fixation (1a, 1b, 1c, 1d, 1e) selon l'une quelconque des revendications précédentes, dans lequel ledit élément de connexion (10a, 10b, 10c, 10d, 10e) dudit système de fixation (1a, 1b, 1c, 1d, 1e) est un premier élément de connexion (10a, 10b, 10c, 10d, 10e) et ledit système de fixation (1a, 1b, 1c, 1d, 1e) comprend en outre au moins un second élément de connexion (10a, 10b, 10c, 10d, 10e) de conception différente de celle du premier élément de connexion (10a, 10b, 10c, 10d, 10e).
